# EUROPÄISCHE PATENTSCHRIFT

(11) **EP 3 549 875 B1**
(45) Veröffentlichungstag und Bekanntmachung des Hinweises auf die Patenterteilung: **31.05.2023**
(21) Anmeldenummer: 18166099.4
(22) Anmeldetag: 06.04.2018
(51) Int. Cl.: B64G 1/48, B64G 1/40

(54) **REGENERATIVES LUFTERNEUERUNGSSYSTEM FÜR EINEN BEMANNTEN RAUMKÖRPER**
REGENERATIVE AIR RENEWAL SYSTEM FOR A MANNED SPACECRAFT
SYSTÈME D'AÉRATION RENOUVELABLE POUR UN CORPS SPATIAL

(43) Veröffentlichungstag der Anmeldung: 09.10.2019
(73) Patentinhaber: Airbus Defence and Space GmbH, 82024 Taufkirchen (DE)
(72) Erfinder: Raatschen, Willigert, 88090 Immenstaad (DE); Lange, Max, 28211 Bremen (DE)
(74) Vertreter: Daub, Thomas

(56) Entgegenhaltungen:
- WO-A2-2007/027876
- JP-B1- 3 479 950
- JP-B1- 3 639 861
- US-A- 5 279 484

## Beschreibung

### Stand der Technik

Die Erfindung betrifft einen Raumkörper mit einem regenerativen Lufterneuerungssystem.

Es ist bereits ein Lufterneuerungssystem für einen bemannten Raumkörper, mit zumindest einer Reaktionsvorrichtung, welche dazu vorgesehen ist aus metabolischem Kohlendioxid einer Kabine des Raumkörpers Sauerstoff, insbesondere für die Kabine, zurückzugewinnen, vorgeschlagen und gebaut worden, siehe z.B. JP 3 479950 B1.

Die Aufgabe der Erfindung besteht insbesondere darin, eine gattungsgemäße Vorrichtung mit verbesserten Eigenschaften hinsichtlich einer Effizient sowie eine Nutzbarkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Raumkörper mit einem regenerativen Lufterneuerungssystem mit zumindest einer Reaktionsvorrichtung, welche dazu vorgesehen ist aus metabolischem Kohlendioxid einer Kabine des Raumkörpers Sauerstoff, insbesondere für die Kabine, zurückzugewinnen.

Es wird vorgeschlagen, dass die Reaktionsvorrichtung dazu vorgesehen ist, zumindest einen Teil eines mittels der Reaktionsvorrichtung erzeugten Stoffes einer Antriebseinheit des Raumkörpers zuzuführen. Die Reaktionsvorrichtung ist dazu vorgesehen, zumindest einen Teil eines mittels der Reaktionsvorrichtung chemisch erzeugten Stoffes einer Antriebseinheit des Raumkörpers zuzuführen. Besonders bevorzugt kann der erzeugte Stoff ferner direkt von der Antriebseinheit verarbeitet und/oder in einem Tank der Antriebseinheit gespeichert werden. So wäre beispielsweise denkbar, dass der erzeugte Stoff direkt einer Brennkammer der Antriebseinheit zugeführt wird. Bevorzugt ist der Raumkörper insbesondere von einem Raumflugkörper gebildet. Unter einem "regenerativen Lufterneuerungssystem" soll in diesem Zusammenhang insbesondere ein System eines Raumkörpers verstanden werden, welches zu einer regenerativen Rückgewinnung zumindest eines lebenswichtigen Stoffs, wie insbesondere Sauerstoff, Wasser und/oder Kohlenstoff vorgesehen ist. Vorzugsweise erfolgt eine Rückgewinnung insbesondere mittels eines zumindest teilweise geschlossenen Kreislaufs. Das Lufterneuerungssystem kann beispielsweise auf physikochemischen Prozessen basieren. Das Lufterneuerungssystem ist zu einer zumindest teilweisen Rückgewinnung von Sauerstoff vorgesehen. Unter einem "bemannten Raumkörper" soll in diesem Zusammenhang insbesondere ein zu einer Beherbergung einer Besatzung, welche vorzugsweise aus zumindest einem Lebewesen, insbesondere Menschen, besteht, vorgesehener Körper verstanden werden.

Die Beherbergung kann auch zum Zwecke der Beförderung erfolgen, so dass unter einem "bemannten Raumkörper" auch ein Fahrzeug zur Beförderung von Personen zu Lande, im Wasser, in der Luft oder im Weltraum verstanden werden kann. Der Raumkörper weist zumindest einen in zumindest einem Betriebszustand zumindest im Wesentlichen abgeschlossenen Raum auf, welcher zu einer Beherbergung einer Besatzung vorgesehen ist. Erfindungsgemäß weist der Raumkörper eine Kabine auf. Es sind verschiedene, einem Fachmann als sinnvoll erscheinende bemannte Raumkörper denkbar, wie beispielsweise U-Boote, Flugzeuge, Raumflugkörper und/oder insbesondere Raumstationen. Unter einem "in wenigstens einem Betriebszustand abgeschlossenen Raum" soll in diesem Zusammenhang insbesondere ein Raum verstanden werden, der in zumindest einem Betriebszustand, vorzugsweise in einem Betriebszustand mit geschlossenen Zugangstüren, zumindest im Wesentlichen gegenüber einer Umgebung hinsichtlich eines freien Luftstroms und/oder eines Fluidaustauschs abgeschirmt ist. Unter einem "Raumflugkörper" soll in diesem Zusammenhang insbesondere ein von Menschenhand geschaffener Flugkörper für den Weltraum verstanden werden. Es sind verschiedene, einem Fachmann als sinnvoll erscheinende Raumflugkörper denkbar, wie beispielsweise Raketen, Raumsonden, Raumfähren, Raumschiffe und/oder Raumkapseln.

Unter einer "Reaktionsvorrichtung" soll in diesem Zusammenhang insbesondere eine Vorrichtung verstanden werden, die zumindest eine Reaktionseinheit zu einer Durchführung, insbesondere zu einer kontinuierlichen und/oder periodischen Durchführung, einer gezielten chemischen Reaktion vorgesehen ist. Es soll darunter eine Vorrichtung des regenerativen Lufterneuerungssystems verstanden werden, welche zu einer gezielten Durchführung zumindest einer chemischen Reaktion zu einer Rückgewinnung von Sauerstoff aus metabolischem Kohlendioxid vorgesehen ist. Ferner soll unter "metabolischem Kohlendioxid" insbesondere von einer Besatzung metabolisch verarbeitetes und/oder erzeugtes Kohlendioxid verstanden werden.

Des Weiteren soll in diesem Zusammenhang unter einer "Antriebseinheit" eine Einheit verstanden werden, welche zu einer Fortbewegung und/oder einem Manövrieren des Raumkörpers dient. Zusätzlich wäre auch denkbar, dass die Antriebseinheit beispielsweise zu einer Energieerzeugung für den Raumkörper vorgesehen ist. Bevorzugt ist die Antriebseinheit zu einer Umwandlung chemischer Energie vorgesehen. Vorzugsweise ist die Antriebseinheit dazu vorgesehen, einen chemischen Antrieb bereitzustellen, bei welchen zwei gasförmige Komponenten verwendet werden. Insbesondere ist die Antriebseinheit dazu vorgesehen, eine chemische Mischung, insbesondere vorteilhaft von Methan und Sauerstoff zu verwenden. Vorzugsweise ist die Antriebseinheit insbesondere dazu vorgesehen, zumindest einen mittels der Reaktionsvorrichtung erzeugten Stoff, wie insbesondere Methan und/oder Sauerstoff, zu einer Erzeugung einer chemischen Reaktion, wie insbesondere durch Verbrennung, zu nutzen. Die chemische Reaktion ist insbesondere für eine Manövrierung des Raumkörpers vorgesehen. Vorzugsweise wird durch die Detonation der chemischen Reaktion ein Rückstoß erzeugt. Bevorzugt treibt der Rückstoß den Raumkörper an. Insbesondere weist die Antriebseinheit zumindest eine Schubdüse, vorzugsweise zumindest zwei Schubdüsen, auf.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch das erfindungsgemäße regenerative Lufterneuerungssystem wird eine Reaktionsvorrichtung des Lufterneuerungssystems zudem zu einer Bereitstellung eines Antriebsstoffs für die Antriebseinheit verwendet. Es kann insbesondere ein vorteilhaft effizientes Lufterneuerungssystem bereitgestellt werden. Es kann insbesondere eine vorteilhaft effiziente Nutzung erzeugter Stoffe der Reaktionsvorrichtung erreicht werden.

Ferner wird vorgeschlagen, dass die Reaktionsvorrichtung zumindest einen Sabatierreaktor aufweist und dazu vorgesehen ist, zumindest einen Teil eines mittels des Sabatierreaktors in einer Sabatierreaktion erzeugten Methans der Antriebseinheit des Raumkörpers zuzuführen. Die Reaktionsvorrichtung ist dazu vorgesehen, zumindest einen Teil eines mittels des Sabatierreaktors erzeugten Methans der Antriebseinheit des Raumkörpers zu einer Verbrennung zuzuführen. Unter einem "Sabatierreaktor" soll in diesem Zusammenhang insbesondere eine Reaktionseinheit verstanden werden, welche zu einer definierten Durchführung einer Sabatierreaktion vorgesehen ist, bei der insbesondere Kohlenstoffdioxid und Wasserstoff in Methan und Wasser umgewandelt werden. Vorzugsweise erfolgt die Reaktion mittels eines Katalysators. Bevorzugt läuft die Reaktion, zumindest bei erhöhter Temperatur und erhöhtem Druck unter Verwendung eines Nickel-Katalysators ab. Alternativ oder zusätzlich wäre jedoch auch die Verwendung von Ruthenium auf einem Aluminiumoxid-Substrat denkbar. Dadurch kann erreicht werden, dass die Reaktionsvorrichtung zudem zu einer Bereitstellung eines Antriebsstoffs für die Antriebseinheit verwendet werden kann. Es kann insbesondere ein vorteilhaft effizientes Lufterneuerungssystem bereitgestellt werden. Es kann insbesondere eine vorteilhaft effiziente Nutzung des Methans des Sabatierreaktors erreicht werden. Es kann insbesondere vermieden werden, dass das Methan ungenutzt in den Weltraum abgelassen werden muss.

Des Weiteren wird vorgeschlagen, dass die Reaktionsvorrichtung zumindest einen Elektrolyseur, welcher zu einer Erzeugung von Sauerstoff und Wasserstoff vorgesehen ist, aufweist. Bevorzugt weist der Elektrolyseur zumindest eine Elektrolysezelle auf, welche zu einer direkten Erzeugung von Sauerstoff und Wasserstoff vorgesehen ist. Vorzugsweise ist der Elektrolyseur zu einer wiederkehrenden Erzeugung von Wasserstoff und Sauerstoff vorgesehen. Bevorzugt wird bei dem Elektrolyseur unter Energieaufnahme durch einen elektrischen Strom insbesondere Wasser in molekularen Sauerstoff und molekularen Wasserstoff gespalten. Grundsätzlich kann anstelle von Wasser als Eduktstoff ein anderer chemischer Stoff, welcher Wasserstoffatome und Sauerstoffatome enthält, verwendet werden. Unter einer "Elektrolysezelle" soll in diesem Zusammenhang insbesondere eine Einheit mit zumindest zwei Elektroden verstanden werden, wovon vorzugsweise eine als eine Wasserstoffelektrode und eine als eine Sauerstoffelektrode ausgebildet ist, mit einem die zwei Elektroden verbindenden Stromkreis, mit zumindest einem zumindest zwischen den zwei Elektroden angeordneten Elektrolyt und/oder mit einer zumindest zwischen den zwei Elektroden angeordneten elektrolytgefüllten oder ionen- oder protonenleitenden Membran verstanden werden. Vorzugsweise ist die Einheit zu einer Durchführung einer Redox-Reaktion vorgesehen, bei der unter Aufwendung von Energie in Form von elektrischer Leistung ein Eduktstoff, vorzugsweise Wasser, zu einer Erzeugung von einem ersten Gas, vorzugsweise molekularem Wasserstoff, und einem zweiten Gas, vorzugsweise molekularem Sauerstoff, gespalten wird. Dadurch kann insbesondere zuverlässig Sauerstoff, vorzugsweise für eine Kabine, erzeugt werden. Es kann insbesondere eine Weiterverarbeitung des Wassers des Sabatierreaktors erreicht werden. Vorzugsweise ist der Elektrolyseur zu einer Erzeugung von Sauerstoff für die Kabine sowie von Wasserstoff für den Sabatierreaktor unter Verwendung von Wasser des Sabatierreaktors und/oder eines Wassertanks vorgesehen.

Es wird ferner vorgeschlagen, dass der zumindest ein Elektrolyseur dazu vorgesehen ist, zumindest einen Teil eines erzeugten Sauerstoffs der Antriebseinheit des Raumkörpers zuzuführen. Vorzugsweise ist der zumindest ein Elektrolyseur dazu vorgesehen, zumindest einen Teil eines erzeugten Sauerstoffs der Antriebseinheit des Raumkörpers zu einer chemischen Reaktion mit dem Methan des Sabatierreaktors zuzuführen.

Die Reaktionsvorrichtung ist dazu vorgesehen, der Antriebseinheit Methan und Sauerstoff als Treibstoff zuzuführen. Besonders bevorzugt ist das Methan und der Sauerstoff in der Antriebseinheit zu einer Entzündung vorgesehen. Dadurch kann insbesondere mittels des regenerativen Lufterneuerungssystems Treibstoff bereitgestellt werden. Es kann insbesondere eine vorteilhaft effiziente Nutzung des regenerativen Lufterneuerungssystems erreicht werden. Vorzugsweise kann insbesondere auf zusätzlichen Treibstoff für eine Antriebseinheit verzichtet werden oder zumindest eine Menge eines benötigten Treibstoffs reduziert werden.

Es wird weiter vorgeschlagen, dass die Reaktionsvorrichtung dazu vorgesehen ist, zumindest 70% eines der Kabine des Raumkörpers entzogenen metabolischen Kohlendioxid zu verarbeiten. Vorzugsweise ist die Reaktionsvorrichtung dazu vorgesehen, zumindest 80%, vorzugsweise zumindest 90% und besonders bevorzugt zumindest annähernd 100%, eines der Kabine des Raumkörpers entzogenen metabolischen Kohlendioxids zu verarbeiten. Unter "verarbeiten" soll in diesem Zusammenhang insbesondere ein chemisches Verarbeiten verstanden werden. Dadurch kann insbesondere ein vorteilhaft effizientes Lufterneuerungssystem bereitgestellt werden. Es kann insbesondere ein ungenutztes Ablassen von metabolischem Kohlendioxid, z.B. ins Weltall, vermieden werden. Hierdurch kann insbesondere ein vorteilhaft geschlossenes System bereitgestellt werden, bei welchem eine ungenutzte Ablassung von Gasen möglichst verhindert wird.

Zudem wird vorgeschlagen, dass das regenerative Lufterneuerungssystem einen mit der Reaktionsvorrichtung gekoppelten Wassertank aufweist, wobei zumindest ein Teil eines Füllvolumens zu einer Erzeugung von Sauerstoff für die Antriebseinheit vorgesehen ist. Vorzugsweise dient der Wassertank zudem der Erzeugung von Sauerstoff für die Kabine, insbesondere mittels des Elektrolyseurs. Bevorzugt dient der Elektrolyseur zudem zu der Erzeugung von Sauerstoff für die Antriebseinheit aus dem Wasser des Wassertanks. Dadurch kann insbesondere Masse für einen Treibstoff in Form von Wasser mitgeführt werden. Es kann insbesondere anstatt von Treibstoff Wasser mitgeführt werden. Vorzugsweise kann dadurch erreicht werden, dass zumindest ein Teil des Treibstoffs für die Antriebseinheit in Form von Wasser gespeichert werden kann. Hierdurch kann ferner ein vorteilhaft sicherer Raumkörper bereitgestellt werden. Es kann insbesondere das Mitführen eines explosiven Treibstoffs, zumindest in großen Mengen, vermieden werden. Ferner geht die Erfindung aus von einem Raumkörper mit einer Kabine, mit einer Antriebseinheit und mit dem regenerativen Lufterneuerungssystem. Es wird vorgeschlagen, dass das regenerative Lufterneuerungssystem direkt mit der Antriebseinheit gekoppelt ist. Das regenerative Lufterneuerungssysterr ist über zumindest eine, vorzugsweise über zumindest zwei Fluidleitungen, insbesondere Gasleitungen, des Raumkörpers mit der Antriebseinheit gekoppelt. Die zumindest eine Fluidleitung des Raumkörpers kann dabei mit einem ersten Ende sowohl mit einem Tank der Antriebseinheit, als auch direkt mit einer Brennkammer der Antriebseinheit gekoppelt sein. Besonders bevorzugt ist eine erste Fluidleitung des Raumkörpers mit einem zweiten Ende mit dem Sabatierreaktor des regenerativen Lufterneuerungssystems und eine zweite Fluidleitung mit einem zweiten Ende mit dem Elektrolyseur des regenerativen Lufterneuerungssystems gekoppelt. Dadurch kann erreicht werden, dass die Reaktionsvorrichtung zudem zu einer direkten Bereitstellung eines Antriebsstoffs für die Antriebseinheit verwendet werden kann. Es kann insbesondere ein vorteilhaft effizienter Raumkörper bereitgestellt werden. Es kann insbesondere eine vorteilhaft effiziente Nutzung des Methans des Sabatierreaktors erreicht werden. Es kann insbesondere vermieden werden, dass Gase des regenerativen Lufterneuerungssystems ungenutzt abgelassen werden.

Des Weiteren wird vorgeschlagen, dass die Antriebseinheit zu einer direkten Verwendung von Sauerstoff und Methan des regenerativen Lufterneuerungssystems als Treibstoff vorgesehen ist. Vorzugsweise sind der Sauerstoff und das Methan zu einer gemeinsamen Verbrennung vorgesehen. Bevorzugt weist die Antriebseinheit eine Brennkammer auf. Besonders bevorzugt ist die Antriebseinheit in zumindest einem Betriebszustand dazu vorgesehen, Sauerstoff und Methan des regenerativen Lufterneuerungssystems der Brennkammer zuzuführen. Hierdurch kann insbesondere vorteilhaft mittels des regenerativen Lufterneuerungssystems Treibstoff für die Antriebseinheit bereitgestellt werden. Es kann insbesondere ein vorteilhaft effizientes Lufterneuerungssystem sowie eine vorteilhaft effiziente Antriebseinheit bereitgestellt werden.

Ferner geht die Erfindung aus von einem Verfahren zu einem Betrieb des regenerativen Lufterneuerungssystems für den bemannten Raumkörper, wobei aus einem der Kabine des Raumkörpers entnommenen metabolischem Kohlendioxid Sauerstoff zurückgewonnen wird. Es wird vorgeschlagen, dass zumindest ein Teil eines bei der Rückgewinnung des Sauerstoffs anfallenden Stoffs einer Antriebseinheit des Raumkörpers zugeführt wird. Bei der Rückgewinnung des Sauerstoffs wird eine Sabatierreaktion durchgeführt, wobei das dabei erzeugte Methan zumindest zu einem Teil der Antriebseinheit zugeführt wird. Vorzugsweise wird zumindest ein Teil des in der Sabatierreaktion erzeugten Methans einer Antriebseinheit des Raumkörpers zu einer Verbrennung oder als Kaltgas zugeführt. Dadurch kann erreicht werden, dass die Reaktionsvorrichtung zudem zu einer Bereitstellung eines Antriebsstoffs für die Antriebseinheit verwendet wird. Es kann insbesondere ein vorteilhaft effizientes Lufterneuerungssystem bereitgestellt werden. Es kann insbesondere eine vorteilhaft effiziente Nutzung des Methans des Sabatierreaktors erreicht werden. Es kann insbesondere vermieden werden, dass das Methan ungenutzt abgelassen wird.

Des Weiteren wird vorgeschlagen, dass bei der Rückgewinnung des Sauerstoffs eine Elektrolyse durchgeführt wird, wobei der dabei erzeugte Sauerstoff zu einem Teil der Kabine des Raumkörpers und zu einem Teil der Antriebseinheit zugeführt wird. Vorzugsweise wird zumindest ein Teil eines mittels Elektrolyse erzeugten Sauerstoffs der Antriebseinheit des Raumkörpers zu einer chemischen Reaktion mit dem Methan des Sabatierreaktors zugeführt. Bevorzugt wird hierzu das Methan und der Sauerstoff der Reaktionsvorrichtung der Antriebseinheit als Treibstoff zugeführt. Besonders bevorzugt ist das Methan und der Sauerstoff in der Antriebseinheit zu einer Entzündung vorgesehen. Dadurch kann insbesondere mittels des regenerativen Lufterneuerungssystems Treibstoff bereitgestellt werden. Es kann insbesondere eine vorteilhaft effiziente Nutzung des regenerativen Lufterneuerungssystems erreicht werden. Vorzugsweise kann insbesondere auf einen zusätzlichen Treibstoff für eine Antriebseinheit verzichtet werden oder zumindest eine Menge eines benötigten Treibstoffs reduziert werden.

Es wird ferner vorgeschlagen, dass bei der Rückgewinnung des Sauerstoffs eine Sabatierreaktion durchgeführt wird, wobei dabei zumindest 70% des der Kabine des Raumkörpers der Reaktionsvorrichtung entzogenen metabolischen Kohlendioxid umgesetzt werden. Vorzugsweise werden dabei zumindest 80%, vorzugsweise zumindest 90% und besonders bevorzugt zumindest annähernd 100% des der Kabine des Raumkörpers der Reaktionsvorrichtung entzogenen metabolischen Kohlendioxid umgesetzt werden. Dadurch kann insbesondere ein vorteilhaft effizientes Lufterneuerungssystem bereitgestellt werden. Es kann insbesondere ein ungenutztes Ablassen von metabolischem Kohlendioxid vermieden werden. Hierdurch kann insbesondere ein vorteilhaft geschlossenes System bereitgestellt werden, bei welchem eine ungenutzte Ablassung von Gasen möglichst verhindert wird.

Zudem wird vorgeschlagen, dass die Durchführung unter Bedingungen reduzierter oder erhöhter Schwerkraft erfolgt. Vorzugsweise soll dieses Verfahren im Weltraum angewandt werden, wie beispielsweise bei µg in einem Raumkörper, wie beispielsweise einem Raumschiff oder einer Raumstation. Mit "g" ist der Wert der Fallbeschleunigung auf der Erde von 9,81 m/s² bezeichnet.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Raumkörper mit einer Kabine, mit einer Antriebseinheit und mit einem erfindungsgemäßen regenerativen Lufterneuerungssystem in einer schematischen Darstellung,
- Fig. 2: das erfindungsgemäße regenerative Lufterneuerungssystem und die Antriebseinheit in einer schematischen Darstellung und
- Fig. 3: einen schematischen Ablauf eines Verfahrens zu einem Betrieb des erfindungsgemäßen regenerativen Lufterneuerungssystems.

### Beschreibung des Ausführungsbeispiels

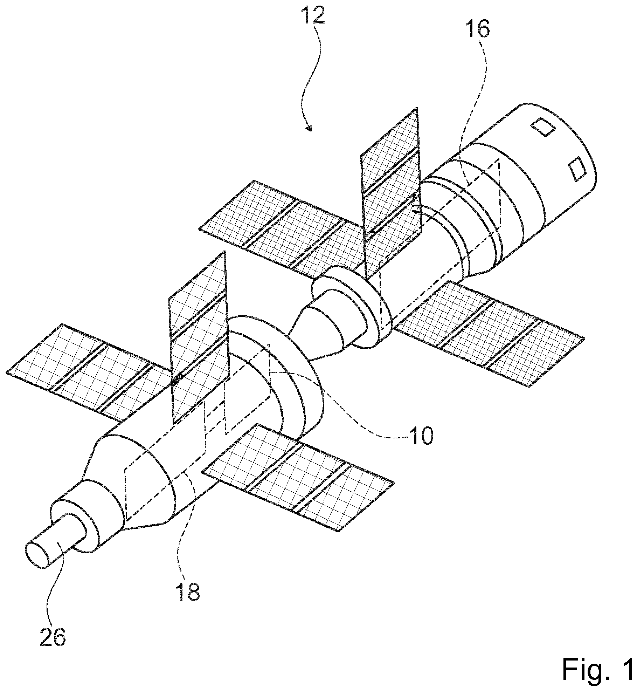

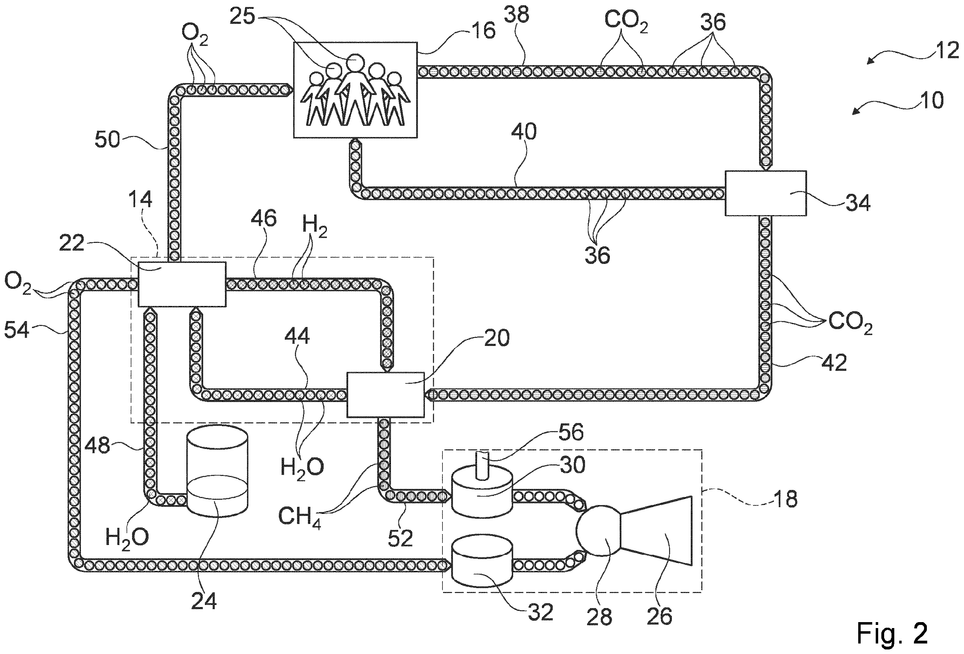

Die Figuren 1 und 2 zeigen einen bemannten Raumkörper 12. Der bemannte Raumkörper 12 ist von einer Raumstation gebildet. Grundsätzlich wäre jedoch auch eine andere, einem Fachmann als sinnvoll erscheinende Ausbildung des Raumkörpers 12 denkbar, wie beispielweise als Raumschiff. Der Raumkörper 12 ist zu einer Verwendung im Weltraum, unter Bedingungen reduzierter oder erhöhter Schwerkraft vorgesehen. Ferner weist der Raumkörper 12 eine Kabine 16 auf. Die Kabine 16 ist zu einer Aufnahme einer Besatzung 25 vorgesehen. Die Kabine 16 besteht aus zumindest einem Raum, kann jedoch auch aus mehreren, miteinander verbundenen Räumen bestehen. Die Räume können dabei sowohl direkt, als auch über Schleusen miteinander verbunden sein. Die Kabine 16 ist in zumindest einem Betriebszustand gegenüber einer Umgebung zumindest im Wesentlichen abgeschlossen.

Ferner weist der Raumkörper 12 eine Antriebseinheit 18 auf. Die Antriebseinheit 18 dient zu einer Manövrierung des Raumkörpers 18 im Weltraum. Als nicht beanspruchte Alternative oder zusätzlich wäre jedoch auch denkbar, dass die Antriebseinheit 18 zu einer Energieerzeugung, insbesondere von elektrischer Energie vorgesehen ist. Die Antriebseinheit 18 umfasst zumindest eine Schubdüse 26. Die Antriebseinheit 18 kann zumindest teilweise mit Methan CH₄ und Sauerstoff O₂ betrieben werden. Die Antriebseinheit 18 umfasst zumindest eine Brennkammer 28. Beispielhaft ist die zumindest eine Schubdüse 26 der Brennkammer 28 nachfolgend angeordnet. Die Brennkammer 28 ist der Schubdüse 26 vorgeschaltet. Beispielhaft weist die Antriebseinheit 18 eine einzelne Schubdüse 26 auf. Alternativ sind mehrere Schubdüsen denkbar, welche beispielsweise gleich oder verschieden ausgebildet sind, und insbesondere verschiedene Ausrichtungen aufweisen um verschiedene Manövrierungsrichtungen zu realisieren. Ferner weist die Antriebseinheit 18 einen ersten Tank 30 zu einer Aufnahme von Methan CH₄ und einen zweiten Tank 32 zu einer Aufnahme von Sauerstoff O₂ auf. Der erste Tank 30 und der zweite Tank 32 sind jeweils mit der Brennkammer 28 verbunden. Der erste Tank 30 und der zweite Tank 32 sind jeweils über eine nicht weiter dargestellte Pumpe und/oder ein nicht weiter dargestelltes Regelventil sowie eine nicht weiter dargestellte Einspritzdüse mit der Brennkammer 28 verbunden.

Des Weiteren weist der Raumkörper 12 ein regeneratives Lufterneuerungssystem 10 auf. Das regenerative Lufterneuerungssystem 10 ist für einen bemannten Raumkörper 12 vorgesehen. Das regenerative Lufterneuerungssystem 10 ist dazu vorgesehen, der Kabine 16 Raumluft 36 und ein darin befindliches metabolisches Kohlendioxid CO₂ zu entziehen, aus dem metabolischen Kohlendioxid CO₂ Sauerstoff O₂ zurückzugewinnen und den gewonnen Sauerstoff O₂ der Kabine 16 zuzuführen. Die Raumluft 36 wird beispielsweise mittels einer nicht weiter sichtbaren Pumpe/Ventilator abgesaugt. Das regenerative Lufterneuerungssystem 10 weist ferner eine Kohlendioxidabscheidevorrichtung 34 auf. Die Kohlendioxidabscheidevorrichtung 34 ist über eine Abluftleitung 38 mit der Kabine 16 verbunden. Über die Abluftleitung 38 wird der Kohlendioxidabscheidevorrichtung 34 Raumluft 36 aus der Kabine 16 zugeführt. Die Kohlendioxidabscheidevorrichtung 34 ist dazu vorgesehen, Kohlendioxid CO₂, insbesondere metabolisches Kohlendioxid CO₂, von der abgesaugten Raumluft 36 abzuscheiden. Die Kohlendioxidabscheidevorrichtung 34 ist ferner über eine Zuluftleitung 40 mit der Kabine 16 verbunden, über welche eine von dem Kohlendioxid CO₂, insbesondere von dem metabolischen Kohlendioxid CO₂, befreite Raumluft 36 wieder der Kabine 16 zugeführt werden kann. Vorzugsweise wird die Raumluft 36 mittels der Kohlendioxidabscheidevorrichtung 34 bis zu einem definierten Verhältnis von Kohlendioxid CO₂ befreit.

Ferner weist das regenerative Lufterneuerungssystem 10 eine Reaktionsvorrichtung 14 auf. Die Reaktionsvorrichtung 14 ist dazu vorgesehen, aus metabolischem Kohlendioxid CO₂ der Kabine 16 des Raumkörpers 12 Sauerstoff O₂ für die Kabine 16 zurückzugewinnen. Die Reaktionsvorrichtung 14 ist dazu vorgesehen, zumindest 70% eines der Kabine 16 des Raumkörpers 12 entzogenen metabolischen Kohlendioxid CO₂ zu verarbeiten. Die Reaktionsvorrichtung 14 ist dazu vorgesehen, annähernd 100% eines der Kabine 16 des Raumkörpers 12 entzogenen metabolischen Kohlendioxid CO₂ zu verarbeiten. Die Reaktionsvorrichtung 14 weist einen Sabatierreaktor 20 auf. Der Sabatierreaktor 20 ist dazu vorgesehen, das metabolische Kohlenstoffdioxid CO₂ und Wasserstoff H₂ chemisch in Methan CH₄ und Wasser H₂O umzuwandeln. Der Sabatierreaktor 20 ist dazu über eine Kohlendioxidleitung 42 mit der Kohlendioxidabscheidevorrichtung 34 verbunden. Über die Kohlendioxidleitung 42 kann metabolisches Kohlenstoffdioxid CO₂ von der Kohlendioxidabscheidevorrichtung 34 dem Sabatierreaktor 20 zugeführt werden. Der Wasserstoff H₂ für die Sabatierreaktion wird über einen Elektrolyseur 22 bereitgestellt. Der Sabatierreaktor 20 ist dazu über eine Wasserstoffleitung 46 mit dem Elektrolyseur 22 verbunden.

Die Reaktionsvorrichtung 14 weist den Elektrolyseur 22 auf. Der Elektrolyseur 22 ist zu einer Erzeugung von Sauerstoff O₂ und Wasserstoff H₂ vorgesehen. Der Elektrolyseur 22 weist zumindest eine Elektrolysezelle auf. Der Elektrolyseur 22 ist zu einer Erzeugung von Sauerstoff O₂ und Wasserstoff H₂ aus Wasser H₂O vorgesehen. Das Wasser H₂O für den Elektrolyseur 22 wird dabei teilweise über den Sabatierreaktor 20 bereitgestellt, welcher dazu vorgesehen ist Wasser H₂O zu erzeugen. Der Sabatierreaktor 20 ist dazu über eine erste Wasserleitung 44 mit dem Elektrolyseur 22 verbunden. Ferner weist das Lufterneuerungssystem 10 zu einer Bereitstellung des Wassers H₂O einen Wassertank 24 auf. Der Wassertank 24 ist mit der Reaktionsvorrichtung 14 gekoppelt. Der Wassertank 24 ist mit dem Elektrolyseur 22 gekoppelt. Der Wassertank 24 ist über eine zweite Wasserleitung 48 mit dem Elektrolyseur 22 gekoppelt. Über die zweite Wasserleitung 48 wird dem Elektrolyseur 22 Wasser H₂O aus dem Wassertank 24 zugeführt.

Ein mittels des Elektrolyseurs 22 erzeugter Wasserstoff H₂ ist dazu vorgesehen, vollständig dem Sabatierreaktor 20 zugeführt zu werden. Ferner wird zumindest ein Teil des erzeugten Sauerstoffs O₂ der Kabine 16 zugeführt. Der Elektrolyseur 22 ist dazu über eine erste Sauerstoffleitung 50 mit der Kabine 16 gekoppelt. Über die erste Sauerstoffleitung 50 kann mittels des Elektrolyseurs 22 erzeugter Sauerstoff O₂ der Kabine 16 zugeführt werden. Es wäre jedoch auch denkbar, dass der Sauerstoff O₂ beispielsweise vor der Kabine 16 bereits der Raumluft 36 der Zuluftleitung 40 beigemischt wird.

Das Lufterneuerungssystem 10 ist ferner direkt mit der Antriebseinheit 18 gekoppelt. Die Reaktionsvorrichtung 14 des regenerativen Lufterneuerungssystems 10 ist dazu vorgesehen, einen Teil eines mittels der Reaktionsvorrichtung 14 erzeugten Stoffes der Antriebseinheit 18 des Raumkörpers 12 zuzuführen. Die Reaktionsvorrichtung 14 ist dazu vorgesehen, zumindest einen Teil des mittels des Sabatierreaktors 20 in der Sabatierreaktion erzeugten Methans CH4 der Antriebseinheit 18 des Raumkörpers 12 zuzuführen. Die Reaktionsvorrichtung 14 ist dazu vorgesehen, das mittels des Sabatierreaktors 20 in der Sabatierreaktion erzeugten Methans CH₄ der Antriebseinheit 18 des Raumkörpers 12 zuzuführen. Das Methan CH₄ wird dazu dem ersten Tank 30 der Antriebseinheit 18 zugeführt, welcher zu einer Aufnahme von Methan CH₄ vorgesehen ist. Der Sabatierreaktor 20 ist dazu über eine Methanleitung 52 mit dem ersten Tank 30 verbunden. Grundsätzlich wäre jedoch auch denkbar, dass das Methan CH₄ direkt beispielsweise der Brennkammer 28 der Antriebseinheit 18 zugeführt wird. Der erste Tank 30 der Antriebseinheit 18 weist zudem einen Auslass 56 auf, über welchen überschüssiges Methan CH₄ (d.h. Methan CH₄, welches nicht für die Verbrennung in der Antriebseinheit 18 benötigt wird), abgelassen werden kann. Zudem oder alternativ wäre auch denkbar, das überschüssige Methan CH₄ als Kaltgas für den Antrieb zu verwenden.

Ferner ist der Elektrolyseur 22 dazu vorgesehen, einen Teil eines erzeugten Sauerstoffs O₂ der Antriebseinheit 18 des Raumkörpers 12 zuzuführen. Der Elektrolyseur 22 ist dazu vorgesehen, ca. 40% eines erzeugten Sauerstoffs O₂ der Antriebseinheit 18 des Raumkörpers 12 zuzuführen. Ein Teil eines Füllvolumens des Wassertanks 24 ist zu einer Erzeugung von Sauerstoff O₂ für die Antriebseinheit 18 vorgesehen. Der Elektrolyseur 22 nutzt ein Teil des Füllvolumens des Wassertanks 24 zu einer Erzeugung von Sauerstoff O₂ für die Antriebseinheit 18. Der Sauerstoff O₂ wird dazu dem zweiten Tank 32 der Antriebseinheit 18 zugeführt, welcher zu einer Aufnahme von Sauerstoff O₂ vorgesehen ist. Der Elektrolyseur 22 ist dazu über eine zweite Sauerstoffleitung 54 mit dem zweiten Tank 32 verbunden. Grundsätzlich wäre jedoch auch denkbar, dass der Sauerstoff O₂ direkt beispielsweise der Brennkammer 28 der Antriebseinheit 18 zugeführt wird.

Die Antriebseinheit 18 ist zu einer direkten Verwendung des Sauerstoffs O₂ und des Methans CH₄ des regenerativen Lufterneuerungssystems 10 als Treibstoff vorgesehen. Die Antriebseinheit 18 ist zu einer gemeinsamen Verbrennung des Sauerstoffs O₂ und des Methans CH₄ des regenerativen Lufterneuerungssystems 10 als Treibstoff vorgesehen.

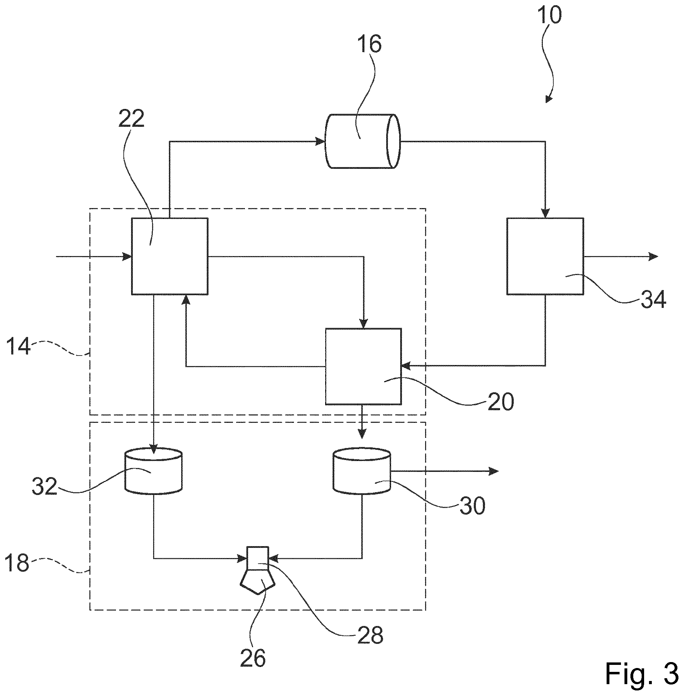

Figur 3 zeigt einen schematischen Ablauf eines Verfahrens zu einem Betrieb des regenerativen Lufterneuerungssystems 10 für den bemannten Raumkörper 12. Bei dem Verfahren wird aus einem der Kabine 16 des Raumkörpers 12 entnommenen metabolischen Kohlendioxid CO₂ Sauerstoff O₂ zurückgewonnen. Bei dem Verfahren wird mittels der Reaktionsvorrichtung 14 des Lufterneuerungssystems 10, aus metabolischem Kohlendioxid CO₂ einer Kabine 16 des Raumkörpers 12 zumindest mittels einer Sabatierreaktion Sauerstoff O₂ zurückgewonnen. Das Verfahren ist dabei beispielhaft anhand einer Besatzung 25 von vier Personen beschrieben, wobei insbesondere Zahlenwerte beispielhaft auf die Besatzung 25 von vier Personen bezogen sind und nicht zwangläufig auf andere Konstellationen, insbesondere Besatzungen, anwendbar sind. Es wird hier insbesondere davon ausgegangen, dass ein Besatzungsmitglied 0,84 kg Sauerstoff O₂ pro Tag benötigt und 1 kg Kohlendioxid CO₂ pro Tag ausatmet.

Bei dem Verfahren wird in einem ersten Schritt der Kabine 16 Raumluft 36 und ein darin befindliches metabolisches Kohlendioxid CO₂ entzogen und der Kohlendioxidabscheidevorrichtung 34 zugeführt. Die Raumluft 36 wird beispielsweise mittels einer nicht weiter sichtbaren Pumpe/Ventilator abgesaugt. Die Kohlendioxidabscheidevorrichtung 34 scheidet von der abgesaugten Raumluft 36 Kohlendioxid CO₂, insbesondere metabolisches Kohlendioxid CO₂ab. Es werden in dem oben beschriebenen Beispiel eine Kabinenbesatzung von 4 Personen 0,091 kmol/d abgeschieden. Anschließend wird die von dem Kohlendioxid CO₂, insbesondere von dem metabolischen Kohlendioxid CO₂, befreite Raumluft 36 wieder der Kabine 16 zugeführt. Ferner wird das abgeschiedene metabolische Kohlendioxid CO₂ vollständig der Reaktionsvorrichtung 14 zugeführt. Es wird kein Kohlendioxid CO₂ abgelassen. Es werden daher 0,091 kmol/d Kohlendioxid CO₂ der Reaktionsvorrichtung 14 zugeführt.

Die Reaktionsvorrichtung 14 gewinnt aus metabolischem Kohlendioxid CO₂ der Kabine 16 des Raumkörpers 12 Sauerstoff O₂ für die Kabine 16 zurück. Das metabolische Kohlendioxid CO₂ wird dazu dem Sabatierreaktor 20 zugeführt. Der Sabatierreaktor 20 wandelt das metabolische Kohlenstoffdioxid CO₂ und Wasserstoff H₂ chemisch in Methan CH₄ und Wasser H₂O um. Bei der Rückgewinnung des Sauerstoffs O₂ wird demnach eine Sabatierreaktion durchgeführt. Dabei wird vom Elektrolyseur 22 über die Wasserstoffleitung 46 ausreichend Wasserstoff zugeführt, so dass zumindest 70% des der Kabine 16 des Raumkörpers 12 der Reaktionsvorrichtung 14 entzogenen metabolischen Kohlendioxids CO₂ umgesetzt werden. Besonders bevorzugt wird die pro Zeiteinheit zugeführte Masse des Wasserstoffs so bemessen, dass bei der Sabatierreaktion annähernd 100% des der Kabine 16 des Raumkörpers 12 der Reaktionsvorrichtung 14 entzogenen metabolischen Kohlendioxids CO₂ umgesetzt werden, was in dem hier betrachteten Beispiel durch einen H₂-Massenstrom von 0,364 kmol/d erreicht wird.

Das erzeugte Wasser H₂O der Sabatierreaktion wird anschließend dem Elektrolyseur 22 zugeführt. Es werden bei vollständiger Umsetzung des CO₂ 0,182 kmol/d von dem Sabatierreaktor 20 erzeugtes Wasser H₂O dem Elektrolyseur 22 zugeführt. Der Elektrolyseur 22 erzeugt aus dem Wasser H₂O des Sabatierreaktors 20 sowie aus dem Wasser H₂O des Wassertanks 24 Sauerstoff O₂ und Wasserstoff H₂. Es werden beispielshaft 0,182 kmol/d Wasser H₂O des Wassertanks 24 dem Elektrolyseur 22 zugeführt. Der bei der Elektrolyse erzeugte Wasserstoff H₂ wird dem Sabatierreaktor 20 zugeführt. Der H₂O Massenstrom ist so bemessen, dass der daraus in dem Elektrolyseur 22 erzeugte H₂-Massenstrom von 0,364 kmol/d ausreicht, um den dem Sabatierreaktor 20 zugeführten Massenstrom von 0,091 kmol/d Kohlendioxid CO₂ vollständig umzusetzen.

Bei der Rückgewinnung des Sauerstoffs O₂ wird eine Elektrolyse durchgeführt, wobei der dabei erzeugte Sauerstoff O₂ zu einem Teil der Kabine 16 des Raumkörpers 12 zugeführt wird. Es werden beispielshaft 0,105 kmol/d von dem Elektrolyseur 22 erzeugter Sauerstoff O₂ der Kabine 16 des Raumkörpers 12 zugeführt, um den vorgegebenen SauerstoffBedarf der Besatzung zu decken. Der verbleibende Rest des bei der Elektroylse anfallenden Sauerstoffs O₂ von 0,077 kmol/d wird der Antriebseinheit 18 zugeführt.

Ferner wird zumindest ein Teil eines bei der Rückgewinnung des Sauerstoffs O₂ anfallenden Stoffs der Antriebseinheit 18 des Raumkörpers 12 zugeführt. Das mittels des Sabatierreaktors 20 in der Sabatierreaktion erzeugte Methan CH₄ wird der Antriebseinheit 18 des Raumkörpers 12 zugeführt. Das Methan CH₄ wird dem ersten Tank 30 der Antriebseinheit 18 zugeführt und in diesem gespeichert. Im Beispiel werden bei vollständiger Umsetzung des CO₂ 0,091 kmol/d von dem Sabatierreaktor 20 erzeugtes Methan CH₄ dem ersten Tank 30 der Antriebseinheit 18 zugeführt. Zudem wird, wie bereits erwähnt, der bei der Elektrolyse erzeugte Sauerstoff O₂ zu einem Teil der Antriebseinheit 18 zugeführt. Der Sauerstoff O₂ wird dem zweiten Tank 32 der Antriebseinheit 18 zugeführt und in diesem gespeichert. Es werden beispielhaft 0,077 kmol/d von dem Elektrolyseur 22 erzeugten Sauerstoffs O₂ dem zweiten Tank 30 der Antriebseinheit 18 zugeführt. Das Methan CH₄ aus dem ersten Tank 30 und der Sauerstoff O₂ aus dem zweiten Tank 32 werden anschließend der Brennkammer 28 der Antriebseinheit 18 zu einer Verbrennung als Treibstoff zugeführt. Von dem Methan CH₄ werden lediglich 0,044 kmol/d der Brennkammer 28 zugeführt. Diese sind bei Anwendung des diesem Beispiel zugrunde liegenden Verbrennungsluftverhältnisses λₘₐₛₛ = 3,5 ausreichend, um mit dem zugeführten O₂-Massenstrom von 0,077 kmol/d vollständig zu reagieren. Der überschüssige CH₄ -Strom von 0,047 kmol/d kann über den Auslass 56 des ersten Tanks 30 abgelassen werden. Es ist auch möglich, für das Verbrennungsluftverhältnis andere Werte als 3,5 zu wählen, so dass sich die Menge des überschüssigen CH₄-Stromes entsprechend verändern würde.

Bei einer Besatzung 25 von vier Personen benötigt das Verfahren 3,28 kg/d Wasser H₂O, wobei lediglich 0,75 kg/d Methan CH₄, jedoch kein CO2 mehr abgelassen werden müssen. Eine Gesamtzuladung für Treibstoff und das Lufterneuerungssystem 10 beträgt daher 3,28 kg/d. Die im obigen Beispiel für den Antrieb verwendeten Massenströme von 0,044 kmol/d_CH₄ und 0,077 kmol/d_O₂ entsprechen einer Antriebsleistung von 5,28 kg/d Hydrazin (1kg Hydrazin entspricht 0,133kg_CH4 + 0467 kg_O2). Ein vergleichbares System, bei welchem Hydrazin als Triebstoff verwendet wird, und bei welchem das Lufterneuerungssystem und die Antriebseinheit getrennt sind, benötigt daher 5,28 kg/d Hydrazin für den Antrieb und 1,89 kg/d Wasser H₂O für das Lufterneuerungssystem, was zu einer Gesamtzuladung des Raumkörpers für Zwecke des Antriebs und Lebenserhaltung von 7,17 kg/d führt. Es kann daher im beschriebenen Beispiel durch das erfindungsgemäße regenerative Lufterneuerungssystem 10 54% an Zuladungsgewicht eingespart werden.

Ein beispielhafter Anwendungsfall könnte ferner wie folgt aussehen: Das Lufterneuerungssystem 10 erzeugt bei einer Besatzung 25 von sieben Personen in sechzig Tagen 153 kg Methan CH₄. Von dem Methan CH₄ sind 74 kg zusammen mit 259 kg Sauerstoff O₂ als Treibstoff nutzbar. Hierdurch werden 145 kg zusätzliches Wasser H₂O für den Treibstoff benötigt. 74 kg Methan CH₄ und 259 kg Sauerstoff O₂ entsprechen 554 kg Hydrazin. Demnach kann mit 145 kg zusätzlichem Wasser H₂O eine Menge Treibstoff äquivalent zu 554 kg Hydrazin mittels des Lufterneuerungssystems 10 erzeugt werden. Zudem können die 79 kg des produzierten, jedoch nicht als Treibstoff verwendeten Methan CH₄ vorteilhaft als Kaltgas für den Antrieb verwendet werden.

Die vorliegende Erfindung kombiniert in vorteilhafter Weise Antrieb und Lufterneuerungssystem eines Raumkörpers. Das bei der Sabatierreaktion entstehende Methan wird vorteilhaft für den Antrieb verwendet. Der für den Antrieb ebenfalls benötigte zusätzliche Sauerstoff wird über die Zuladung von zusätzlichem Wasser für die Elektroylse erzeugt. Der durch die erhöhte Zuladung von Wasser bei der Elektrolyse anfallende Wasserstoff wird vorteilhaft für die vollständige Umsetzung des metabolischen Kohlendioxids in der Sabatierreaktion verwendet. Somit muss kein metabolisches Kohlendioxid von Bord gelassen werden, sondern kann im regenerativen Kreislauf gehalten werden. Das Gesamtsystem kann auf maximale Effizienz eingestellt werden, in dem nur so viel zusätzliches Wasser an Bord genommen wird, wie für die vollständige Umsetzung des metabolisch erzeugten CO₂ in der Sabatierreaktion notwendig ist. Mit zusätzlichem Wasser ist der Teil der Wasserzuladung gemeint, der über die Versorgung der Besatzung mit Sauerstoff hinaus benötigt wird.

## Patentansprüche

1. Raumkörper mit einer Kabine (16), mit einer Antriebseinheit (18) und mit einem regenerativen Lufterneuerungssystem (10) mit zumindest einer Reaktionsvorrichtung (14), welche dazu vorgesehen ist, aus metabolischem Kohlendioxid CO₂ einer Kabine (16) des Raumkörpers (12) Sauerstoff O₂ zurückzugewinnen, wobei die Reaktionsvorrichtung (14) zumindest einen Sabatierreaktor (20) aufweist, **dadurch gekennzeichnet, dass** die Reaktionsvorrichtung (14) dazu vorgesehen ist, zumindest einen Teil eines mittels der Reaktionsvorrichtung (14) erzeugten Stoffes der Antriebseinheit (18) des Raumkörpers (12) zuzuführen, wobei das regenerative Lufterneuerungssystem (10) direkt, über zumindest eine, vorzugsweise über zumindest zwei Fluidleitungen, insbesondere Gasleitungen, des Raumkörpers mit der Antriebseinheit (18) gekoppelt ist, und die Reaktionsvorrichtung (14) dazu vorgesehen ist, zumindest einen Teil eines mittels des Sabatierreaktors (20) in einer Sabatierreaktion erzeugten Methans CH₄ der Antriebseinheit (18) des Raumkörpers (12) zuzuführen, wobei die Antriebseinheit (18) zu einer direkten Verwendung von Sauerstoff O₂ und Methan CH₄ des regenerativen Lufterneuerungssystems (10) als Treibstoff vorgesehen ist.

2. Raumkörper nach Anspruch 1,
**dadurch gekennzeichnet, dass**
die Reaktionsvorrichtung (14) zumindest einen Elektrolyseur (22), welcher zu einer Erzeugung von Sauerstoff O₂ und Wasserstoff H₂ vorgesehen ist, aufweist.

3. Raumkörper nach Anspruch 2,
**dadurch gekennzeichnet, dass**
der zumindest eine Elektrolyseur (22) dazu vorgesehen ist, zumindest einen Teil eines erzeugten Sauerstoffs O₂ der Antriebseinheit (18) des Raumkörpers (12) zuzuführen.

4. Raumkörper nach einem der vorhergehenden Ansprüche,
**dadurch gekennzeichnet, dass**
die Reaktionsvorrichtung (14) dazu vorgesehen ist, zumindest 70%, vorteilhaft mehr als 99% eines der Kabine (16) des Raumkörpers (12) entzogenen metabolischen Kohlendioxid CO₂ zu verarbeiten.

5. Raumkörper nach einem der vorhergehenden Ansprüche,
**dadurch gekennzeichnet, dass**
das regenerative Lufterneuerungssystem (10) einen mit der Reaktionsvorrichtung (14) gekoppelten Wassertank (24) aufweist, wobei zumindest ein Teil eines Füllvolumens zu einer Erzeugung von Sauerstoff O₂ für die Antriebseinheit (18) vorgesehen ist.

6. Verfahren zu einem Betrieb eines Raumkörpers (12) nach einem der Ansprüche 1 bis 5, wobei aus einem der Kabine (16) des Raumkörpers (12) entnommenen metabolischem Kohlendioxid CO₂ Sauerstoff O₂ zurückgewonnen wird, wobei zumindest ein Teil eines bei der Rückgewinnung des Sauerstoffs O₂ anfallenden Stoffs einer Antriebseinheit (18) des Raumkörpers (12) zugeführt wird.

7. Verfahren nach Anspruch 6,
**dadurch gekennzeichnet, dass**
bei der Rückgewinnung des Sauerstoffs O₂ eine Sabatierreaktion durchgeführt wird, wobei dabei zumindest 70% des der Kabine (16) des Raumkörpers (12) entzogenen metabolischen Kohlendioxid CO₂ in der Reaktionsvorrichtung (14) umgesetzt werden.

8. Verfahren nach Anspruch 6 oder 7,
**dadurch gekennzeichnet, dass**
bei der Rückgewinnung des Sauerstoffs O₂ eine Elektrolyse durchgeführt wird, wobei der dabei erzeugte Sauerstoff O₂ zu einem Teil der Kabine (16) des Raumkörpers (12) und zu einem Teil der Antriebseinheit (18) zugeführt wird.

## Claims

1. Space body with a cabin (16), with a drive unit (18) and with a regenerative air renewal system (10) comprising at least one reaction device (14) which is configured to recuperate oxygen O₂ from metabolic carbon dioxide CO₂ of a cabin (16) of the space body (12),
the reaction device (14) comprising at least one Sabatier reactor (20),
**characterised in that**
the reaction device (14) is configured to feed at least a portion of a substance generated by means of the reaction device (14) to the drive unit (18) of the space body (12), wherein the regenerative air renewal system (10) is coupled directly with the drive unit (18) via at least one, preferably via at least two fluid line/s, in particular gas line/s, of the space body,
the reaction device (14) being configured to feed at least a portion of a methane CH₄ generated by means of the Sabatier reactor (20) in a Sabatier reaction to the drive unit (18) of the space body (12),
wherein the drive unit (18) is configured for a direct usage of oxygen O₂ and methane CH₄ of the regenerative air renewal system (10) as a fuel.

2. Space body according to claim 1,
**characterised in that**
the reaction device (14) comprises at least one electrolyser (22), which is configured for a generation of oxygen O₂ and hydrogen H₂.

3. Space body according to claim 2,
**characterised in that**
the at least one electrolyser (22) is configured to feed at least a portion of a generated oxygen O₂ to the drive unit (18) of the space body (12).

4. Space body according to one of the preceding claims,
**characterised in that**
the reaction device (14) is configured for processing at least 70 %,
advantageously more than 99 %, of a metabolic carbon dioxide CO₂ removed from the cabin (16) of the space body (12).

5. Space body according to one of the preceding claims,
**characterised in that**
the regenerative air renewal system (10) comprises a water tank (24) that is coupled with the reaction device (14),
wherein at least a portion of a filling volume is configured for a generation of oxygen O₂ for the drive unit (18).

6. Method for operating a space body (12) according to one of claims 1 to 5,
wherein oxygen O₂ is recuperated from metabolic carbon dioxide CO₂ taken from the cabin (16) of the spatial body (12),
wherein at least a portion of a substance produced during the recuperation of the oxygen O₂ is fed to a drive unit (18) of the space body (12).

7. Method according to claim 6,
**characterised in that**
in the recuperation of the oxygen O₂ a Sabatier reaction is carried out,
in which at least 70 % of the metabolic carbon dioxide CO₂ removed from the cabin (16) of the space body (12) are converted in the reaction device (14).

8. Method according to claim 6 or 7,
**characterised in that**
in the recuperation of the oxygen O₂ an electrolysis is carried out,
wherein the oxygen O₂ generated therein is fed partly to a portion of the cabin (16) of the space body (12) and partly to a portion of the drive unit (18).

## Revendications

1. Corps spatial avec une cabine (16), avec une unité d'entraînement (18) et avec un système régénératif de renouvellement de l'air (10) ayant au moins un appareil de réaction (14) qui est prévu pour la récupération de l'oxygène O₂ de dioxyde de carbone métabolique CO₂ d'une cabine (16) du corps spatial (12), l'appareil de réaction (14) comprenant au moins un réacteur Sabatier (20),
**caractérisé en ce que**
l'appareil de réaction (14) est prévu pour alimenter à l'unité d'entraînement (18) du corps spatial (12) au moins une partie d'une substance générée par le biais du dispositif de réaction (14), où le système régénératif de renouvellement de l'air (10) est couplé directement avec l'unité d'entraînement (18) par au moins une, préférablement par au moins deux conduite/s de fluide, en particulier conduite/s de gaz, du corps spatial
et où l'appareil de réaction (14) est prévu pour alimenter à l'unité d'entraînement (18) du corps spatial (12) au moins une partie d'un méthane CH₄ généré par le biais du réacteur Sabatier (20),
où l'unité d'entraînement (18) est prévue pour l'usage direct de l'oxygène O₂ et du méthane CH₄ du système régénératif de renouvellement de l'air (10) comme combustible.

2. Corps spatial selon la revendication 1,
**caractérisé en ce que**
l'appareil de réaction (14) comprend au moins un électrolyseur (22) qui est prévu pour la génération de l'oxygène O₂ et de l'hydrogène H₂.

3. Corps spatial selon la revendication 2,
**caractérisé en ce que**
l'au moins un électrolyseur (22) est prévu pour alimenter à l'unité d'entraînement (18) du corps spatial (12) au moins une partie de l'oxygène O₂ généré.

4. Corps spatial selon l'une des revendications précédentes,
**caractérisé en ce que**
l'appareil de réaction (14) est prévu pour le traitement d'au moins 70 %, avantageusement le traitement de plus de 99 % d'un dioxyde de carbone métabolique CO₂ enlevé de la cabine (16) du corps spatial (12).

5. Corps spatial selon l'une des revendications précédentes,
**caractérisé en ce que**
le système régénératif de renouvellement de l'air (10) comprend un réservoir d'eau (24) couplé avec l'appareil de réaction (14),
où au moins une partie d'un volume-remplissage est prévue pour la génération de l'oxygène O₂ pour l'unité d'entraînement (18).

6. Procédé pour l'opération d'un corps spatial (12) selon l'une des revendications 1 à 5, où de l'oxygène O₂ est récupéré du dioxyde de carbone CO₂ enlevé de la cabine (16) du corps spatial (12), où au moins une partie d'une substance produite en récupérant de l'oxygène est alimentée à une unité d'entraînement (18) du corps spatial (12).

7. Procédé selon la revendication 6,
**caractérisé en ce que**
en récupérant de l'oxygène O₂ une réaction de Sabatier est exécutée, dans laquelle au moins 70 % du dioxyde de carbone métabolique CO₂ enlevé de la cabine (16) du corps spatial (12) sont convertis dans l'appareil de réaction (14) dans ladite réaction de Sabatier.

8. Procédé selon la revendication 6 ou 7,
**caractérisé en ce que**
en récupérant de l'oxygène O₂ une électrolyse est exécutée,
où l'oxygène O2 généré dans ladite électrolyse est alimenté en partie à la cabine (16) du corps spatial (12) et en partie à l'unité d'entraînement (18).
